# NOUVEAU FASCICULE DE BREVET EUROPEEN

(11) **EP 0 631 085 B2**
(45) Date de publication et mention de la décision concernant l'opposition: **08.03.2000**
(45) Mention de la délivrance du brevet: 22.01.1997
(21) Numéro de dépôt: 94401102.2
(22) Date de dépôt: 18.05.1994
(51) Int. Cl.: F16L 33/02, F16B 2/08

(54) **Collier de serrage**
Klemmschelle
Clamping collar

(30) Priorité: 19.05.1993 FR 9306045
(43) Date de publication de la demande: 28.12.1994
(73) Titulaire: Etablissements CAILLAU, 92130 Issy-les-Moulineaux (FR)
(72) Inventeur: Calmettes, Lionel, F-23220 Bonnat (FR); André, Michel, F-41200 Romorantin Lanthenay (FR); Detable, Pascal, F-41130 Villedieu (FR)
(74) Mandataire: Descourtieux, Philippe

(56) Documents cités:
- EP-A- 0 003 192
- EP-A- 0 243 224
- EP-A- 0 344 050
- EP-A- 0 460 989
- EP-A- 0 491 609
- EP-A- 0 491 610
- DE-B- 1 259 658
- GB-A- 2 150 201
- US-A- 4 987 652

## Description

Le brevet EP-A-3192 a décrit un collier constitué par une bande métallique, enroulée sur elle-même, dont l'une des extrémités présente une oreille faisant radialement saillie sur la périphérie extérieure du collier et dont l'autre extrémité est conformée en un crochet susceptible d'être agrafé derrière l'oreille pour maintenir le serrage du collier.

On sait que l'un des principaux avantages de ce collier antérieur est d'éviter en principe toute déformation permanente des diverses zones de la bande qui le constitue, au moment de sa mise en place et de son serrage.

Ce type de collier a déjà reçu divers perfectionnements. D'une part, le brevet EP-A-344 050 propose de faciliter le serrage du collier grâce à un bossage disposé sur la face de l'oreille, servant d'appui au bord libre du crochet dans la position serrée du collier. D'autre part, certains perfectionnements visent à conférer au collier une réserve d'élasticité permettant de maintenir un serrage suffisant en cas de modification des dimensions de l'objet à serrer, en particulier sous l'effet des variations de température. A cet égard on peut se référer aux brevets EP-A-460 989, 491 609 ou 491 610.

Toutefois on s'est rendu compte, dans certains cas difficiles, que les qualités des colliers décrits par les brevets précités risquent d'être perdues si des précautions ne sont pas prises au moment de leur mise en place ou de leur serrage.

Plus précisément, lors de l'agrafage du crochet sur l'oreille, l'opérateur peut provoquer par inadvertance un serrage provisoirement trop important du collier. En particulier ce serrage excessif n'est pas empêché par les nervures de guidage ou de renforcement, situées sur la face de l'oreille opposée à la zone d'appui du crochet, telles qu'elles sont décrites par les brevets précités ou visibles sur les dessins qui y sont annexés. Il en résulte que dans certaines zones du collier, notamment dans les réserves d'élasticité ou dans les régions à forte courbure du crochet lui-même, la limite d'élasticité du métal se trouve dépassée. Ainsi, sans que l'opérateur soit en mesure de l'éviter, la pression de serrage du collier après sa mise en place est inférieure à celle pour laquelle l'emploi du collier avait été préconisé par l'installateur et ses caractéristiques dimensionnelles avaient été déterminées par le fabricant. Une telle situation se présente notamment dans la construction automobile et peut conduire à de graves incidents, en particulier si le collier est destiné à assurer le raccordement étanche d'un tuyau souple emmanché sur un tube rigide.

La présente invention a donc pour objet d'éviter, sur les colliers des types précités, tout dépassement de la limite d'élasticité du métal dans une zone quelconque du collier, au cours de sa mise en place et de son serrage. Il va cependant de soi que ce problème n'est à résoudre que dans le cas d'un collier dont les caractéristiques dimensionnelles et le métal de la bande sont adaptés à une utilisation déterminée et prévus pour elle.

L'invention se rapporte à un collier de serrage selon l'une des revendications 1 et 2.

Grâce à ces dispositions très simples le serrage du collier au cours de l'agrafage du crochet ne peut pas excéder ce qui a été prévu par le fabricant et on ne risque donc plus le dépassement de la limite d'élasticité du métal dans certaines zones du collier.

L'invention sera mieux comprise et ses caractéristiques secondaires apparaîtront au cours de la description de quelques exemples de réalisation. A cet effet, on se référera aux dessins annexés dans lesquels :
- La figure 1 est une vue partielle en élévation d'un collier de serrage selon la première forme de l'invention, avant agrafage du crochet sur l'oreille,
- La figure 2 est une vue en coupe du collier selon la figure 1, après agrafage,
- La figure 3 est une vue partielle en élévation du collier, après serrage, dans le cas de la seconde forme de réalisation de l'invention,
- La figure 4 est une vue en élévation d'un autre collier conforme à l'invention, dans le cas d'une variante de la réalisation représentée sur la figure 3.

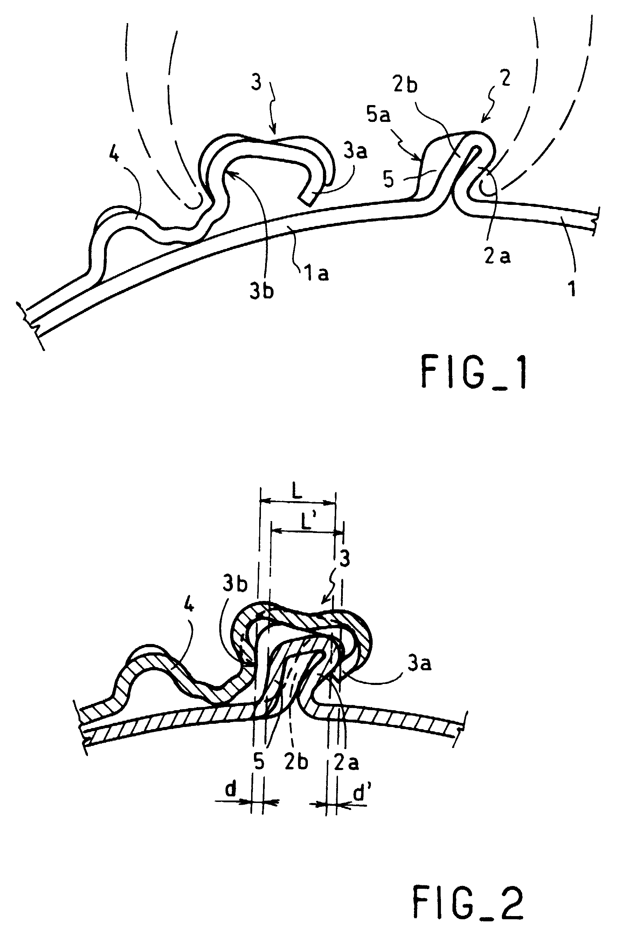

Si l'on se reporte tout d'abord aux figures 1 et 2 on voit un collier du type en question dans lequel la bande ***1*** enroulée sur elle-même comporte une oreille ***2*** constituée par deux plis ***2a*** et ***2b*** faisant saillie radialement sur la périphérie extérieure du collier. L'oreille ***2*** est légèrement inclinée dans la direction opposée à l'extrémité (située à gauche sur les figures) du brin, dit intérieur, qui la porte. Au-delà de l'oreille ***2***, la bande présente un prolongement ***1a*** qui, ainsi qu'on le sait notamment par le brevet EP-A-3192, s'étend avantageusement au moins au-delà du crochet ***3***, avant le serrage du collier.

L'extrémité de l'autre brin, dit extérieur, du collier est en effet conformée en un crochet ***3*** destiné à être agrafé, après serrage du collier, derrière l'oreille ***2***. Dans l'exemple représenté, il est en outre prévu, en arrière du crochet ***3*** une réserve constituée par une ondulation ***4*** de la bande. Le crochet ***3*** et l'ondulation ***4*** peuvent comporter des nervures de raidissement destinées à leur donner la rigidité nécessaire pour une application déterminée.

Comme on le sait, le serrage du collier et l'agrafage du crochet sur l'oreille s'effectuent facilement au moyen d'une pince dont les mâchoires, représentées schématiquement en trait ponctué sur la figure 1 prennent appui derrière le crochet ***3*** et derrière l'oreille ***2*** pour les rapprocher l'un de l'autre jusqu'à ce que l'extrémité libre ***3a*** du crochet soit agrafée derrière l'oreille ***2*** en prenant appui sur le pli ***2a*** de celle-ci.

On a indiqué plus haut qu'au cours de ce rapprochement du crochet et de l'oreille, l'extrémité libre ***3a*** du crochet peut, dans les colliers antérieurs, être amenée notablement au-delà de l'oreille, provoquant ainsi un dépassement de la limite d'élasticité du métal, par exemple dans l'ondulation ***4*** ou dans certaines autres zones de la bande ou du crochet ***3*** lui-même.

Pour éviter un tel risque, un bossage ***5*** est embouti dans le pli ***2b*** au cours de la fabrication du collier, de préférence avant la formation de l'oreille ***2*** par les deux plis ***2a*** et ***2b***.

La forme et les dimensions du bossage ***5*** qui fait corps avec l'oreille ***2***, sont déterminées pour qu'après agrafage de l'extrémité ***3a*** du crochet derrière l'oreille ***2***, la face frontale ***5a*** du bossage soit située au voisinage immédiat de la face interne ***3b*** du crochet (FIG. 2).

Ainsi au cours du serrage et de l'agrafage, le déplacement du crochet ***3*** en direction de l'oreille ***2*** sera limité par l'appui de l'organe de butée que constitue le bossage ***5*** sur la face interne du crochet et l'opérateur ne risque pas de serrer le collier au-delà de ce qui a été prévu par le fabricant.

On peut encore préciser, en se reportant à la figure 2, qu'après agrafage, la face ***5a*** du bossage, c'est-à-dire la zone de contact de butée de l'organe de butée, est située à une distance ***d***, dans le sens périphérique, de la face interne ***3b*** du crochet ***3***.

Cette distance ***d*** est évidemment nécessaire pour permettre l'agrafage ou le dégrafage du crochet et de l'oreille, compte tenu de la géométrie de leurs zones complémentaires d'appui. Il est cependant essentiel que cette distance ***d*** soit aussi faible que possible compte tenu du but poursuivi par l'invention ; il s'agit en effet d'empêcher, au cours du serrage, tout déplacement relatif du crochet par rapport à l'oreille, qui ne serait pas indispensable pour l'agrafage (ou le dégrafage) et qui entraînerait une augmentation momentanée mais inutile du serrage, laquelle serait susceptible de provoquer les inconvénients évoqués plus haut.

Il est également intéressant de considérer, sur le brin extérieur du collier, la distance ***L***, mesurée dans le sens périphérique, entre la face interne ***3b*** du crochet et le bord interne de son extrémité ***3a*** ; il lui correspond, sur le brin intérieur, la distance ***L'***, mesurée également dans le sens périphérique, entre le bord extrême arrière du pli ***2a*** de l'oreille et la zone d'appui ***5a*** de l'organe de butée 5 sur la face interne du crochet. La distance ***L*** est sensiblement égale à la distance ***L'***, sans toutefois lui être inférieure, de sorte que le verrouillage nécessaire à l'agrafage correct du crochet sur l'oreille s'effectue sur une distance ***d'*** aussi voisine que possible de la distance ***d*** précédemment définie. Cette dernière distance ***d*** est donc imposée par la distance ***d'*** nécessaire au verrouillage de l'agrafage (ou au déverrouillage lors du dégrafage) et uniquement par elle.

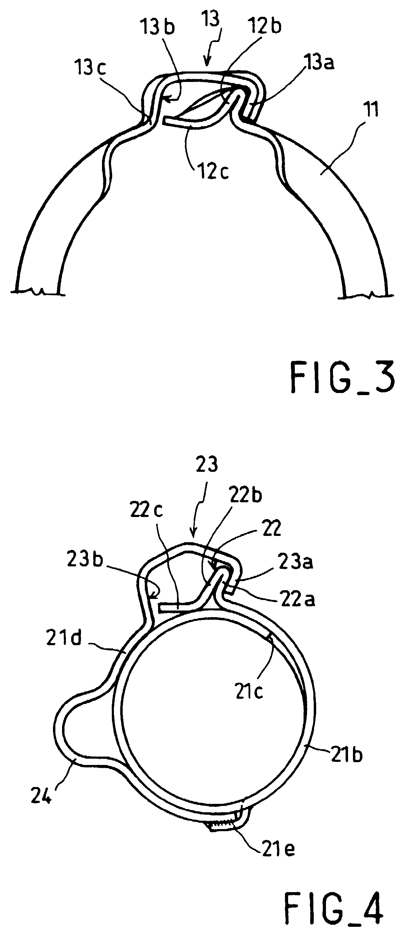

Si l'on se reporte maintenant à la figure 3 on voit une variante de réalisation. Les éléments déjà décrits seront repérés par les mêmes références que celles utilisées sur les figures 1 et 2, mais augmentées de 10.

La bande métallique ***11*** du collier présente dans sa partie courante une section en **U**, adaptée plus particulièrement à l'assemblage de deux tubes dont les extrémités sont évasées et peuvent s'encastrer entre les branches du **U** de la section du collier. Il est également important dans ce cas d'éviter de dépasser la limite d'élasticité du métal dans certaines zones du collier au cours du serrage.

A cet effet, le pli ***12b*** de l'oreille ***12*** est pourvu d'une extension ***12c*** qui s'étend sensiblement suivant la périphérie du collier. Toutefois, la longueur de cette extension est limitée et surtout son extrémité libre formant l'organe de butée est conformée pour prendre appui sur la face interne ***13b*** du crochet ***13*** au cours du serrage du collier. En pratique, il suffira de donner à l'extension ***12c*** une légère courbure vers l'extérieur du collier pour éviter qu'elle ne glisse sous la bande au voisinage de la racine ***13c*** du crochet. Il est évident pour l'homme du métier que les considérations développées plus haut, notamment en ce qui concerne les distances ***L*** et ***L'***, d'une part, ***d*** et ***d'***, d'autre part, sont applicables à ce mode de réalisation.

Si l'on se reporte enfin à la figure 4, on voit une autre variante de réalisation dans laquelle les références utilisées sur les figures 1 et 2 sont augmentées de 20 pour désigner les éléments déjà décrits.

Là encore l'organe de butée faisant corps avec l'oreille ***22*** est constitué par l'extrémité libre de l'extension ***22c*** susceptible de prendre appui sur la face interne ***23b*** du crochet ***23***.

Dans cette variante on a cependant cherché, ainsi que cela est exposé notamment dans la demande EP-A-0 627 591 qui ne fait pas partie de l'état de la technique, à rétablir la continuité parfaite de la périphérie intérieure du collier, ce qui n'était pas nécessaire dans le cas de la variante selon la figure 3.

A cet effet, sur une première portion de bande ***21b*** sont formées l'extension ***22c*** et l'oreille ***22***, cette portion s'enroulant totalement sur elle-même et son extrémité interne ***21c*** étant pourvue de moyens assurant la continuité de la surface intérieure, tels que ceux décrits dans le brevet EP-A-243 224. Une deuxième portion de bande ***21d*** permet la formation du crochet ***23*** et de la réserve ***24****,* et est fixée sur la portion ***21b*** en ***21e****,* par exemple par soudage.

## Revendications

1. Collier de serrage constitué par une bande métallique (1) enroulée sur elle-même, dont l'une des extrémités présente une oreille (2) faisant radialement saillie sur la périphérie extérieure du collier et dont l'autre extrémité est conformée en un crochet (3) susceptible d'être agrafé derrière l'oreille pour maintenir le serrage du collier, caractérisé en ce que, l'oreille (2) étant inclinée dans la direction opposée à l'extrémité du brin de bande intérieur qui la porte, la face (2b) de cette oreille qui est située du côté opposé à la zone d'appui du crochet après agrafage comporte un bossage (5) présentant une face frontale (5a) qui est redressée vers l'extrémité du brin de bande intérieur par rapport à l'oreille, ce bossage (5) constituant un organe de butée qui fait corps avec l'oreille (2) et dont une zone (5a), formée par la face frontale dudit bossage, est susceptible de venir en contact de butée avec la face interne du crochet (3) lorsque celui-ci est en cours d'agrafage sur l'oreille, empêchant alors tout déplacement relatif du crochet par rapport à l'oreille en direction opposée à l'extrémité du brin intérieur qui porte cette oreille et par conséquent toute augmentation du serrage du collier.

2. Collier de serrage constitué par une bande métallique (11, 21b-21d) enroulée sur elle-même, dont l'une des extrémités présente une oreille (12, 22) faisant radialement saillie sur la périphérie extérieure du collier et dont l'autre extrémité est conformée en un crochet (13, 23) susceptible d'être agrafé derrière l'oreille pour maintenir le serrage du collier, caractérisé en ce que le brin de bande intérieur qui porte l'oreille (12, 22) présente une extension (12c, 22c) du pli (12b, 22b) de l'oreille opposé à la zone d'appui du crochet après agrafage, ladite extension s'étendant sensiblement suivant la périphérie du collier et son extrémité libre étant conformée pour venir en contact de butée avec la face interne (13b, 23b) du crochet, cette extension (12c, 22c) constituant un organe de butée qui fait corps avec l'oreille et dont une zone, formée par l'extrémité libre de ladite extension, est susceptible de venir en contact de butée avec la face interne (13b, 23b) du crochet lorsque celui-ci est en cours d'agrafage sur l'oreille, empêchant alors tout déplacement relatif du crochet par rapport à l'oreille en direction opposée à l'extrémité du brin intérieur qui porte cette oreille et par conséquent toute augmentation du serrage du collier.

3. Collier selon la revendication 1 ou 2, caractérisé en ce que, après agrafage, la zone en contact de butée de l'organe de butée est située, par rapport à la face interne du crochet, à une distance périphérique (d), minimale et strictement nécessaire au dégrafage, compte tenu de la géométrie des zones complémentaires d'appui du crochet et de l'oreille.

## Claims

1. A clamp fitting constituted by a metal band (1) wound on itself, of which one of the ends presents an ear (2) radially projecting on the outer periphery of the clamp and of which the other end is shaped as a hook (3) capable of hooking behind the ear to maintain the clamp tightened, characterised in that, the ear (2) being inclined in the direction opposite the extremity of the inner band end which bears it, the face (2b) of said ear that is located opposite the hook-bearing zone after hooking includes a boss (5) having a front face (5a) that is straightened out towards the extremity of the inner band end with respect to the ear, said boss (5) constituting a stop member that is integral with the ear (2) and of which a zone (5a), formed by the front face of said boss, is capable of coming into stop contact with the inner face of the hook (3) when the latter is being hooked on the ear, thus preventing any relative displacement of the hook with respect to the ear in a direction opposite the extremity of the inner end bearing said ear and consequently any increase in the tightening of the clamp.

2. The clamp fitting constituted by a metal band (11, 21b-21d) wound on itself, of which one of the ends presents an ear (12, 22) radially projecting on the outer periphery of the clamp and of which the other end is shaped as a hook (13, 23) capable of hooking behind the ear to maintain the clamp tightened, characterised in that the inner end band that bears the ear (12, 22) has an extension (12c, 22c) of the fold (12b, 22b) of the ear opposite the hook-bearing zone after hooking, said extension extending substantially along the periphery of the clamp and its free end being shaped to come into stop contact with the inner face (13b, 23b) of the hook, said extension (12c, 22c) constituting a stop member that is integral with the ear and of which a zone, formed by the free end of said extension, is capable of coming into stop contact with the inner face (13b, 23b) of the hook when the latter is being hooked on the ear, thus preventing any relative displacement of the hook with respect to the ear in a direction opposite the extremity of the inner end bearing said ear and consequently any increase in the tightening of the clamp.

3. The clamp according to claim 1 or 2, characterised in that, after hooking, the stop contact zone of the stop member is located, with respect to the inner face of the hook, at a peripheral distance (d), minimum and strictly necessary for unhooking, taking into account the geometry of the complementary bearing zones of the hook and the ear.

## Patentansprüche

1. Klemmschelle, gebildet durch ein aufgerolltes Metallband (1), von dem ein Ende einen radial vom Außenumfang der Schelle abstehenden Ansatz (2) aufweist und dessen anderes Ende als zur Aufrechterhaltung der Klemmung der Schelle hinter dem Ansatz einhakbarer Haken (3) ausgebildet ist, dadurch gekennzeichnet, dass, während der Ansatz (2) in der dem Ende des ihn tragenden inneren Bandteils entgegengesetzten Richtung geneigt ist, die Fläche (2b) dieses Ansatzes, die auf der von der Auflagezone des Hakens nach dem Einhaken abgewandten Seite liegt, einen Wulst (5) mit einer vorderen Fläche (5a) aufweist, die in Richtung des Endes des inneren Bandteils in Bezug auf den Ansatz gerichtet ist, wobei der Wulst (5) ein Anschlagorgan bildet, das mit dem Ansatz (2) zusammenhängt, und eine durch die vordere Fläche des Wulstes gebildete Zone (5a) während des Einhakens des Hakens am Ansatz mit der Innenfläche des Hakens (3) in Anschlag bringbar ist, wodurch jegliche Relativverschiebung zwischen Haken und Ansatz in der dem Ende des inneren Bandteiles, der diesen Ansatz trägt, entgegengesetzten Richtung und folglich jede Verstärkung der Klemmung der Schelle verhindert wird.

2. Klemmschelle, gebildet durch ein aufgerolltes Metallband (11, 21b-21d), von dem ein Ende einen radial vom Außenumfang der Schelle abstehenden Ansatz (12, 22) aufweist und dessen anderes Ende als zur Aufrechterhaltung der Klemmung der Schelle hinter dem Ansatz einhakbarer Haken (13, 23) ausgebildet ist, dadurch gekennzeichnet, dass der innere Bandteil, der den Ansatz (12, 22) trägt, eine Verlängerung (12c, 22c) des der Auflagezone des Hakens nach dem Einhaken entgegengesetzten Auffaltungsabschnitts (12b, 22b) des Ansatzes aufweist, welche Verlängerung im Wesentlichen der Umfangsrichtung der Schelle folgt und deren freies Ende so ausgebildet ist, dass es mit der Innenfläche (13b, 23b) des Hakens in Anschlag kommt, wobei diese Verlängerung (12c, 22c) ein Anschlagorgan bildet, das mit dem Ansatz zusammenhängt, und eine Zone, die durch das freie Ende der Verlängerung gebildet ist, während des Einhakens des Hakens am Ansatz mit der Innenfläche (13b, 23b) des Hakens in Anschlag bringbar ist, wodurch jegliche Relativverschiebung zwischen Haken und Ansatz in der dem Ende des inneren Teiles, der diesen Ansatz trägt, entgegengesetzten Richtung und folglich jegliche Verstärkung der Klemmung der Schelle verhindert wird.

3. Klemmschelle nach Anspruch 1 oder 2, dadurch gekennzeichnet, dass nach dem Einhaken die Anschlagskontaktzone des Anschlagorgans sich von der Innenfläche des Hakens in einem Mindestumfangsabstand (d) befindet, welcher unter Berücksichtigung der Geometrie der komplementären Auflagezonen von Haken und Ansatz für das Loshaken unbedingt erforderlich ist.
